# EUROPÄISCHE PATENTANMELDUNG

(11) **EP 3 836 015 A1**
(43) Veröffentlichungstag der Anmeldung: **16.06.2021**
(21) Anmeldenummer: 20212911.0
(22) Anmeldetag: 09.12.2020
(51) Int. Cl.: G06K 9/00

(54) **SENSORSYSTEM ZUR PRÜFUNG VON HANDVENENMUSTERN**

(30) Priorität: 09.12.2019 DE 102019133609
(71) Anmelder: Iris-Gmbh Infrared & Intelligent Sensors, 12439 Berlin (DE)
(72) Erfinder: KRESSING, Christian, 31135 Hildesheim (DE); TANG, Tong, 14199 Berlin (DE); BAHARESTANI, Narges, 10707 Berlin (DE); TRULL, Thomas, 12627 Berlin (DE)
(74) Vertreter: Eisenführ Speiser

(57) **Zusammenfassung**

Die Erfindung betrifft ein Sensorsystem zur Prüfung eines Venenmusters. Das Sensorsystem umfasst eine erste Lichtquelle, welche ausgebildet ist, im Betrieb vollflächig elektromagnetische Wellen mit Wellenlängen im nahen Infrarotbereich auszusenden, die von Hämoglobin absorbiert werden. Weiterhin umfasst das Sensorsystem eine zweite Lichtquelle, die ausgebildet ist, im Betrieb vollflächig elektromagnetische Wellen mit Wellenlängen im Bereich des sichtbaren Lichtes auszusenden. Ferner umfasst das Sensorsystem eine Kamera mit einem ersten Kamerachip, der ausgebildet ist, reflektierte elektromagnetische Wellen mit Wellenlängen im nahen Infrarotbereich aufzunehmen und in ein entsprechendes Infrarotbild umzuwandeln und mit einem zweiten Kamerachip, der ausgebildet ist, reflektierte elektromagnetische Wellen mit Wellenlängen im Bereich des sichtbaren Lichtes aufzunehmen und in ein entsprechendes Lichtbild umzuwandeln. Schließlich umfasst das Sensorsystem eine erste mit dem ersten und dem zweiten Kamerachip verbundene Prozessoreinheit, die ausgebildet ist, das Lichtbild und das Infrarotbild zu vergleichen, einen Übereinstimmungsgrad zwischen Lichtbild und Infrarotbild zu bestimmen und das Venenmuster als echt zu klassifizieren, wenn der Übereinstimmungsgrad kleiner ist als ein vorbestimmter Übereinstimmungsgrad und das Venenmuster als nicht echt zu klassifizieren, wenn der Übereinstimmungsgrad größer oder gleich dem vorbestimmten Übereinstimmungsgrad ist.

## Beschreibung

Die Erfindung betrifft ein Sicherheitssystem sowie ein Sensorsystem zur Prüfung eines Handvenenmusters sowie ein Verfahren zur Prüfung eines Handvenenmusters. Aus dem Stand der Technik sind bereits Sensoren und Systeme zur Aufnahme von Handvenenmustern bekannt, deren Signale beispielsweise für Zugangskontrollen oder Identifizierungen genutzt werden. Ein derartiges Sensorsystem ist beispielsweise in der DE 10 2013 208 654 beschrieben.

Aufgabe der vorliegenden Erfindung ist es, ein verbessertes Sicherheitssystem, ein verbessertes Sensorsystem und ein verbessertes Verfahren zur Aufnahme und Prüfung von Handvenenmustern bereitzustellen, mit denen Fälschungen erkannt werden können.

Zur Lösung dieser Aufgabe wird gemäß einem ersten Aspekt der Erfindung ein Sicherheitssystem mit einem Sensorsystem, einer Authentifizierungseinheit sowie zwei voneinander unabhängigen Datenbanken vorgeschlagen, von denen in der ersten Datenbank eine Personenidentität mit einem Identifizierungscode verknüpft ist und in der zweiten Datenbank der Identifizierungscode mit einem aus den biometrischen Daten erzeugte Venenmuster oder Merkmalsvektor, insbesondere einem daraus abgeleiteten Hashwert, verknüpft ist. Die Authentifizierungseinheit ist hierbei ausgebildet, auf Basis eines von dem Sensorsystem erfassten biometrischen Daten ein Venenmuster oder Merkmalsvektor, insbesondere einem daraus abgeleiteten Hashwert, zu bestimmen und auf Basis dieses so bestimmten Venenmusters oder Merkmalsvektors, insbesondere eines daraus abgeleiteten Hashwerts, auf die zweite Datenbank zuzugreifen um einem dem jeweiligen Venenmuster oder Merkmalsvektor, insbesondere einem daraus abgeleiteten Hashwert, zugeordneten Identifizierungscode aus der zweiten Datenbank abzurufen und auszugeben.

Zusätzlich kann die Authentifizierungseinheit auch ausgebildet sein, auf Basis des abgerufenen Identifizierungscodes auf die erste Datenbank zuzugreifen und die dem Identifizierungscode zugeordnete Personenidentität aus der ersten Datenbank abzurufen und auszugeben.

Das Sensorsystem kann hierbei eines der nachfolgend beschriebenen Art sein, das sowohl Infrarotbilder als auch Lichtbilder eines Venenmusters erfassen und auswerten kann. Das Sensorsystem für das Sicherheitssystem kann aber auch eines sein, das lediglich Infrarotbilder eines Venenmusters erfassen kann.

Gemäß einem auch unabhängig von dem übrigen Sicherheitssystem zu verwirklichenden, eigenständigen Erfindungsgedanken wird die Aufgabe durch ein Sensorsystem gelöst, welches eine erste Lichtquelle, eine zweite Lichtquelle, eine Kamera mit einem ersten und gegebenenfalls einem zweiten Kamerachip sowie eine erste Prozessoreinheit umfasst. Die erste Lichtquelle ist ausgebildet, einen Erfassungsbereich der Kamera vollflächig zu beleuchten und im Betrieb elektromagnetische Wellen mit Wellenlängen im nahen Infrarotbereich auszusenden, die von Hämoglobin absorbiert werden. Die zweite Lichtquelle ist ausgebildet, den Erfassungsbereich der Kamera ebenfalls vollflächig zu beleuchten und im Betrieb elektromagnetische Wellen mit mindestens einer weiteren Wellenlänge, insbesondere im Bereich des sichtbaren Lichts, auszusenden. Die Kamera umfasst einen ersten und einen zweiten Kamerachip oder einen einzigen ersten, kombinierten Kamerachip, von denen der erste Kamerachip ausgebildet ist, reflektierte elektromagnetische Wellen mit Wellenlängen im nahen Infrarotbereich aufzunehmen und in ein entsprechendes Infrarotbild umzuwandeln und von denen der zweite Kamerachip ausgebildet ist, reflektierte elektromagnetischer Wellen der mindestens einen weiteren Wellenlänge aufzunehmen und in ein entsprechendes Lichtbild umzuwandeln. Im Falle eines einzigen kombinierten Kamerachips weist dieser zum einen erste Sensorzellen zum Aufnehmen eines Infrarotbildes und zum anderen zweite Sensorzellen zum Aufnehmen eines Lichtbildes auf. Daneben kann der zweite Kamerachip oder der erste Kamerachip auch verschiedene, für sichtbares Licht empfindliche zweite (und dritte) Sensorzellen aufweisen, die für unterschiedliche Wellenlängenbereiche des sichtbaren Lichtes empfindlich sind, so dass der zweite Kamerachip oder der kombinierte, erste Kamerachip verschiedene Lichtbilder für unterschiedliche Wellenlängenbereiche des sichtbaren Lichts liefern kann.

Als Infrarotbild wird im Rahmen dieser Beschreibung ein unter Infrarotbeleuchtung aufgenommenes Bild bezeichnet, das durch elektrische Signale eines Infrarotsensors repräsentiert ist, während als Lichtbild ein bei Beleuchtung mit der mindestens einen weiteren Wellenlänge, welche insbesondere im Bereich des sichtbaren Lichtes liegt, aufgenommenes Bild bezeichnet wird, das durch elektrische Signale eines Bildsensors repräsentiert ist, der für die weitere Wellenlänge (oder eine weiteren Wellenlängenbereich vorzugsweise im sichtbaren Spektrum des Lichts) empfindlich ist. Der erste Kamerachip und der zweite Kamerachip können auch von einem einzigen, kombinierten Kamerachip verwirklicht sein, der eine Lichtsensor-Matrix aus abwechselnd unterschiedlich empfindlichen Sensorzellen aufweist, nämlich zum einen ersten Sensorzellen, die (nur) für Infrarotlicht empfindlich sind und die ein Infrarotbild liefern und zum anderen solche, die (nur) für sichtbares Licht empfindlich sind und die ein Lichtbild liefern. In diesem Sinne können der erste und der zweite Kamerachip Teil eines einzigen, kombinierten Kamerachips sein.

Vorzugsweise weist der zweite Kamerachip verschiedene zweite Sensorzellen auf, die für unterschiedliche Wellenlängenbereiche des sichtbaren Lichts empfindlich sind, so dass der zweite Kamerachip verschiedene Lichtbilder für die unterschiedlichen Wellenlängenbereiche des sichtbaren Lichts liefern kann.

Die erste Prozessoreinheit ist mit dem ersten und dem zweiten Kamerachip oder dem einzigen kombinierten Kamerachip verbunden und ausgebildet, das Lichtbild mit dem Infrarotbild zu vergleichen, einen Übereinstimmungsgrad zwischen Lichtbild und Infrarotbild zu bestimmen und das Venenmuster als echt zu klassifizieren, wenn der Übereinstimmungsgrad kleiner ist als ein vorbestimmter Übereinstimmungsgrad und das Venenmuster als nicht echt zu klassifizieren, wenn der Übereinstimmungsgrad größer oder gleich dem vorbestimmten Übereinstimmungsgrad ist. Das Venenmuster ist bevorzugt ein Handvenenmuster.

Die Kamera und die Lichtquellen sind vorzugsweise derart gesteuert auslösbar, dass sie ein gated imaging ermöglich. Hierfür sind die Lichtquellen sind vorzugsweise dergestalt, dass sie zeitlich begrenzte Lichtimpulse im jeweiligen Wellenlängeneberich ausgeben und der jeweilige Kamerachip und insbesondere die entsprechenden Sensorzellen werden mit zeitlicher Verzögerung gegenüber dem Abgeben eines Lichtimpulses ausgelesen, so dass auf sehr kurze Distanz reflektiertes Licht von den Sensorzellen nicht erfasst und somit ausgeblendet wird. Der Kamerachip und dessen Sensorzellen erfassen somit nur Licht, dass von Strukturen reflektiert wird, die eine vorgegebene Mindestentfernung von der Kamera haben. So wird verhindert, dass Streulicht von nicht interessierenden Strukturen ausgeblendet wird und das interessierende Bild nicht überstrahlen kann. Letzteres stellt deshalb ein Problem dar, weil auf kurze Distanz reflektiertes Licht eine höhere Intensität hat, als auf vergleichsweise größere Entfernung reflektiertes Licht.

Für den konkreten Anwendungsfall der Handvenenmustererkennung wird die zeitliche Verzögerung für das gated imaging vorzugsweise so eingestellt, dass von der Handoberfläche reflektiertes Licht nicht erfasst wird, sondern nur das von unter der Handoberfläche liegenden Strukturen reflektierte Licht, denn letzteres sind die in diesem Fall interessierenden Strukturen. Dem liegt die Erkenntnis zugrunde, dass sich durch das zeitlich verschobene Auslösen des IR-Sensors das reflektierte Licht an der Handoberfläche (zeitlich) ausblenden lässt. Das an der Handoberfläche reflektierte Licht ist Störlicht und kann den Kamerasensor blenden. Das Unterdrücken dieses Störlichtes führt zu deutlich verbessertem Kontrast. Die Information, dass ein dann geliefertes Venenbild aus einer anderen Tiefe aufgenommen wurde, kann als zusätzliches Prüfkriterium in Ergänzung zur spektralen Fälschungserkennung verwendet werden, da ein auf die Handoberfläche künstlich aufgetragenes Handvenenmuster dann nicht mehr in den Erfassungsbereich des ersten Kamerachips fiele.

Gemäß einem zweiten Aspekt betrifft die Erfindung ein Verfahren zum Prüfen eines Venenmusters. Das Verfahren umfasst die Schritte:
- vollflächiges Bestrahlen einer Hand oder eines Teilbereiches der Hand mit elektromagnetischen Wellen mit Wellenlängen im nahen Infrarotbereich, die von Hämoglobin absorbiert werden,
- Aufnehmen eines Bildes reflektierter elektromagnetischer Wellen mit Wellenlängen im nahen Infrarotbereich und Ausgeben von ein entsprechendes Infrarotbild repräsentierenden Infrarotbildsignalen,
- vollflächiges Bestrahlen der Hand oder eines Teilbereiches der Hand mit elektromagnetischen Wellen mit mindestens einer weiteren Wellenlänge, insbesondere im Bereich des sichtbaren Lichtes,
- Aufnehmen eines Bildes reflektierter elektromagnetischer Wellen mit der mindestens einen weiteren Wellenlängen, und Ausgeben von ein entsprechendes Lichtbild repräsentierenden Lichtbildsignalen,
- Vergleichen des Lichtbildes und des Infrarotbilds miteinander,
- Bestimmen eines Übereinstimmungsgrad zwischen Lichtbild und Infrarotbild und
- Klassifizieren des Handvenenmusters als echt, wenn der Übereinstimmungsgrad kleiner ist als ein vorbestimmter Übereinstimmungsgrad und als nicht echt, wenn der Übereinstimmungsgrad größer als der vorbestimmte Übereinstimmungsgrad ist.

Die Erfindung schließt folgende Erkenntnisse mit ein: nahes Infrarotlicht kann durch die Haut dringen und wird anteilig von unter der Haut liegendem Körpergewebe reflektiert. Hämoglobin in den Venen absorbiert den größten Anteil des Infrarotlichtes, so dass von dem Blut in den Venen nur wenig Infrarotlicht reflektiert wird und die Venen im Infrarotbild somit dunkel erscheinen. In einer Bildaufnahme mit Infrarotlicht führt das Venenmuster folglich zu einem Hell-Dunkel-Kontrast. Im Infrarotbild ist das Venenmuster daher sichtbar. Da nur ein Teil des Infrarotlichtes durch die Haut eindringt, wird auch von der Handoberfläche Infrarotlicht reflektiert. Wird nun ein Venenmuster z.B. mit dunkler Farbe auf die Handoberfläche aufgemalt, so absorbiert die dunkle Farbe ebenfalls ein Teil des Infrarotlichtes bei einer Bildaufnahme mit Infrarotlicht. Das aufgemalte Venenmuster führt also ebenfalls zu einem Hell-Dunkel-Kontrast im Infrarotbild. Aus dem Stand der Technik bekannte Sensorsysteme und Verfahren zur Venenmustererkennung können anhand der von ihnen aufgenommenen Infrarotbilder nicht mit Sicherheit feststellen, ob das jeweilige Infrarotbild ein echtes oder aufgemaltes Venenmuster zeigt. Die Erfindung schließt die Erkenntnis ein, dass mittels einer Aufnahme eines beispielsweise unter sichtbarem Licht aufgenommenen Lichtbildes und einen Vergleich zwischen Infrarotbild und Lichtbild Fälschungen wie aufgemalte Venenmuster sicher erkannt werden können.

Nimmt man ein zweites Bild bei einer Beleuchtung mit einer nicht-infraroten Lichtquelle für insbesondere sichtbares Licht, insbesondere im kürzeren sichtbaren Wellenlängenbereich auf, so ist dieses Licht nicht in der Lage in tiefere Schichten der Haut und unter der Haut einzudringen. Insbesondere sichtbares Licht wird zu dem überwiegenden Teil an der Hautoberfläche reflektiert. Ein mit dunkler Farbe aufgemaltes Venenmuster absorbiert auch das sichtbare Licht, so dass ein aufgemaltes Venenmuster auch in einem Lichtbild zu einem Hell-Dunkel-Kontrast führt, während die tatsächlich vorhanden Venen gerade keinen Hell-Dunkel-Kontrast im Lichtbild hervorrufen.

Ist also sowohl in dem mit dem nahen Infrarotlicht aufgenommenen Abbild, dem Infrarotbild, als auch in dem mit dem sichtbaren Licht aufgenommenen Abbild, dem Lichtbild, ein Venenmuster erkennbar, so handelt es sich bei dem Venenmuster um eine Fälschung.

Die Erfindung schließt darüber hinaus die Erkenntnis ein, dass über einen Vergleich der Bildaufnahmen im insbesondere sichtbaren Bereich und im nahen Infrarotbereich auch Unterschiede oder das Fehlen solcher Unterschiede festgestellt werden können, die auf Oberflächenstrukturen und Materialeigenschaften zurückgehen. So sind die Unterschiede in Infrarotbild und Lichtbild bei einer echten Handoberfläche anders als bei gefälschten Oberflächen, wie: Papier (gedruckte Venenmuster), Kunststoffüberzügen (z.B. Gummihandschuhe), Kunststoffhänden und sonstige Nachahmungen. Grundsätzlich unterscheiden sich Reflexionseigenschaften der Materialien in unterschiedlichen elektromagnetischen Wellenlängenbereichen. Diese Unterschiede werden in den Bildsignalen erkenn- und auswertbar.

Mithilfe der Erfindung ist also eine Überprüfung möglich, ob ein Venenmuster ein echtes Venenmuster ist oder eine Fälschung, indem ein Venenmuster nur als echt klassifiziert, mit anderen Worten identifiziert, wird, wenn der Vergleich von Infrarotbild und Lichtbild einen Übereinstimmungsgrad ergibt, der kleiner ist als ein vorbestimmter Übereinstimmungsgrad.

Somit ist mit der Erfindung ein hinsichtlich der Sicherheit verbessertes Erkennen von Venenmustern und die Abweisung von Fälschungen und damit eine erhöhte Sicherheit für auf Erkennen von Venenmustern basierenden Zugangskontrollen möglich. Die Erfindung schließt weiter die Erkenntnis ein, dass Hämoglobin nur elektromagnetische Wellen mit Wellenlängen im Bereich des nahen Infrarotlichtes absorbiert, jedoch nicht sichtbares Licht und ein echtes Venenmuster daher nur unter Beleuchtung mit nahem Infrarotlicht von einer entsprechenden Kamera erkannt werden kann nicht aber bei Beleuchtung mit sichtbaren Licht. Unter Licht im nahem Infrarotbereich wird im Rahmen der vorliegenden Erfindung Licht mit Wellenlängen im Bereich von 780 - 1100 nm verstanden

Nachfolgend werden Ausführungsbeispiele des erfindungsgemäßen Sensorsystems sowie des erfindungsgemäßen Verfahrens beschrieben. Die zusätzlichen Merkmale der Ausführungsbeispiele können zur Bildung weiterer Ausführungsformen miteinander kombiniert werden, es sei denn, sie sind in der Beschreibung ausdrücklich als Alternativen zueinander beschrieben.

Der Übereinstimmungsgrad wird in einer Ausführungsform statistisch durch die Grundgesamtheit der Daten aus Lichtbild und Infrarotbild im System bestimmt. Der Übereinstimmungsgrad kann durch einen mehrdimensionalen Vektor repräsentiert werden, der ein Ähnlichkeitsmaß ergibt. Alternativ kann der Übereinstimmungsgrad auch über eine Auswertung von Infrarotbild und Lichtbild bestimmt werden, bei der Abweichungen in vordefinierten Bereichen festgestellt werden und nach einem Punktesystem zu einem Übereinstimmungsgrad aufaddiert werden.

In einer Ausführungsform umfasst der vorbestimmte Übereinstimmungsgrad einen unteren vorbestimmten Übereinstimmungsgrad und einen oberen vorbestimmten Übereinstimmungsgrad, der größer ist als der untere vorbestimmte Übereinstimmungsgrad. Das Klassifizieren des Handvenenmusters erfolgt als echt dann, wenn der Übereinstimmungsgrad kleiner ist als der untere vorbestimmte Übereinstimmungsgrad und als nicht echt, wenn der Übereinstimmungsgrad größer als der obere vorbestimmte Übereinstimmungsgrad ist. Mit dieser Ausführungsform ist eine verbesserte Überprüfung möglich, ob ein Venenmuster ein echtes Venenmuster ist oder eine Fälschung, indem ein Venenmuster nur als echt klassifiziert wird, wenn der Vergleich von Infrarotbild und Lichtbild einen Übereinstimmungsgrad ergibt, der hinreichend auf eine der beiden Klassifizierungen hindeutet. In einer Weiterbildung dieser Ausführungsform erfolgt ein Ausgeben eines Warnsignals oder ein Ausgeben einer Aufforderung zum erneuten Vorzeigen an einen Nutzer, wenn der Übereinstimmungsgrad zwischen dem unteren vorbestimmten Übereinstimmungsgrad und dem oberen vorbestimmten Übereinstimmungsgrad liegt.

Bevorzugt ist die erste Prozessoreinheit zum Vergleichen des Infrarotbildes und des Lichtbildes zur Durchführung eines Differenzbildverfahren oder eines Vergleichs des Informationsgehaltes des Infrarotbildes und des Lichtbildes oder eines Vergleichs auf der Basis ausgewählter Punkte ausgebildet. In einer Ausführungsform ist die erste Prozessoreinheit ausgebildet, den Übereinstimmungsgrad über eine Schwellwertbetrachtung zu bestimmen.

Des Weiteren ist es vorteilhaft, wenn die erste Lichtquelle ausgebildet ist, elektromagnetische Wellen mit einer Wellenlänge zwischen 820 nm und 900 nm, z.B. von 850 nm auszusenden. Bei dieser Wellenlänge ist die Absorption der elektromagnetischen Wellen durch das Hämoglobin besonders stark, so dass Venenmuster besonders gut zu erkennen sind. Weiterhin ist es bevorzugt, wenn die zweite Lichtquelle ausgebildet ist, elektromagnetische Wellen mit einer Wellenlänge zwischen 450 nm und 500 nm, z.B. von 470 nm auszusenden.

In einer Ausführungsform des Sensorsystems sind die erste und die zweite Lichtquelle in Form einer einzigen breitbandigen Lichtquelle ausgebildet. Hierbei können zwei Filter, nämlich ein erster und ein zweiter Filter vorgesehen sein, von denen der erste Filter ausgebildet ist, nur elektromagnetische Wellen mit Wellenlängen im nahen Infrarotbereich passieren zu lassen und der zweite Filter ausgebildet ist, nur elektromagnetische Wellen mit der mindestens einer weiteren Wellenlänge, insbesondere im Bereich des sichtbaren Lichtes passieren zu lassen. Dabei können der erste und der zweite Filter entweder abwechselnd vor die breitbandige Lichtquelle geschaltet werden oder Teil der Kamera sein. Der Kamerachip kann dann ein einziger, breitbandig empfindlicher Kamerachip sein und das jeweilige Infrarotbild und das zugehörige Lichtbild können durch Schalten der entsprechenden Filter erzeugt werden. In diesem Fall können auch die ersten und zweiten Sensorzellen breitbandig empfindlich und identisch sein. Der erste Kamerachip ist dann ein breitbandig empfindlicher Kamerachip mit vorgeschalteten Infrarotfilter (also einem Infrarot durchlässigen Filter, der sichtbares Licht sperrt) und der zweite Kamerachip ist dann ein breitbandig empfindlicher Kamerachip mit vorgeschalteten Infrarotsperrfilter, der Infrarotlicht sperrt und für sichtbares Licht transparent ist.

Mit diesen Ausführungsformen wird ermöglicht, durch Wechsel der Filter Änderungen der Beleuchtungsszenarien zwischen definierten Wellenlängen um Beleuchtungsszenarien an besondere Gegebenheiten in denen das Sensorsystem eingesetzt wird, anzupassen. Darüber hinaus ist die Verwendung von Filtern mit breitbandiger Lichtquelle an Stelle von Lichtquellen eng definierter Abstrahlcharakteristiken vielfach preisgünstiger und der Aufbau des Sensorsystems kann bei Verwendung nur einer Lichtquelle wesentlich kompakter ausgestaltet werden.

Vorteilhaft sind der erste und zweite Kamerachip zusammen als ein gemeinsamer Kamerachip ausgebildet, d.h. beide Funktionen sind auf einem gemeinsamen Kamerachip integriert. Dies erlaubt den Aufbau eines kompakteren Systems. Insbesondere kann der gemeinsame Kamerachip ein einziger, sowohl für sichtbares wie auch für infrarotes Licht empfindlicher Kamerachip sein.

In einer vorteilhaften Ausführungsform sind die erste und die zweite Lichtquelle ausgebildet, abwechselnd in unmittelbarer Abfolge von Bild zu Bild oder Teilbildern elektromagnetische Wellen auszusenden, so dass unmittelbar hintereinander jeweils ein Infrarotbild (erste Lichtquelle) und ein normales Bild (zweite Lichtquelle) aufgenommen werden. Der erste und/oder zweite oder der gemeinsame Kamerachip ist insbesondere ein Halbleiter-Kamerachip.

Vorzugsweise umfasst das Sensorsystem einen optischen Doppelbandpassfilter vor dem ersten und zweiten oder gemeinsamen Kamerachip, der nur für die Wellenlängenbereiche des von der ersten und zweiten Lichtquelle abgegebenen Lichtes transparent ist und alle anderen Wellenlängen insbesondere störendes Hintergrundlicht, wie Sonnenstrahlung ausblendet. Die Wellenlängen der ersten und zweiten Lichtquelle können dabei auch schmale Wellenlängenbereiche umfassen.

In einer Ausführungsform ist die Prozessoreinheit zusätzlich ausgebildet, bei Klassifizierung des Handvenenmusters als nicht echt eine Ausgabe eines Warnsignales zu veranlassen. Dieses Warnsignal kann beispielsweise in Form eines akustischen Signales ausgegeben werden, das gegebenenfalls anwesendes Sicherheitspersonal auf einen unerwünschten Zugriffsversuch hinweist. In einer Weiterbildung kann das Warnsignal aber auch in Form eines Signals an elektronische Sicherheitssysteme ausgegeben werden, die beispielsweise für einen vorbestimmten Zeitraum weitere Zugriffe auf ein zu schützendes nachgeschaltetes System verhindern oder zunächst das Sensorsystem für einen vorbestimmten Zeitraum blockieren.

In einer bevorzugten Ausführungsform ist eine mit dem Sensorsystem verbundene Freigabeeinheit vorgesehen, die ausgebildet ist, bei Klassifizierungen des Venenmusters als echt einen weiteren Klassifizierungsprozess zu veranlassen oder Zugang zu einem nachgeschalteten System zu ermöglichen. In dieser Ausführungsform wird die Klassifizierung des Venenmusters als echt als Zugangshürde entweder für eine weitere Überprüfung des echten Venenmusters oder bei Systemen verwendet, in denen es nur darum geht, grundsätzlich nur Menschen Zugang zu gewähren als alleinige Zugangshürde.

Bevorzugt ist die erste Prozessoreinheit zusätzlich ausgebildet, den weiteren Klassifizierungsprozess auszuführen, der eine Bildvorverarbeitung des Infrarotbildes, eine Merkmalsextraktion und einen Klassifikationsalgorithmus umfasst, der das Venenmuster als ausreichend übereinstimmend oder nicht ausreichend übereinstimmend klassifiziert.

Vorzugsweise ist die erste Prozessoreinheit ausgebildet, in einem Ruhemodus des Sensorsystems, in dem nur die zweite Lichtquelle in regelmäßigen Zeitintervallen Lichtimpulse aussendet, aus den reflektierten Lichtimpulsen einen Abstand zu berechnen, und beim Unterschreiten eines vorbestimmten Mindestabstands eine Bestrahlung mit der ersten Lichtquelle zu starten. Dies erlaubt einen effizienten Betrieb des Sensorsystems, da die Bestrahlung mit der ersten Lichtquelle und die nachfolgende Generierung und Auswertung der Lichtbilder nur ausgeführt werden, wenn sich ein Objekt im bestrahlten Bereich befindet.

In einer bevorzugten Ausführungsform ist die erste Prozessoreinheit zusätzlich ausgebildet, bei Klassifizierung des Venenmusters als echt das Infrarotbild mit mindestens einem hinterlegten Venenmuster oder einem dem Venenmuster entsprechenden hinterlegten Merkmalsvektor zu vergleichen und das echte Venenmuster abhängig von einem Muster-Übereinstimmungsgrad als ausreichend übereinstimmend oder nicht ausreichend übereinstimmend zu klassifizieren. Hierbei ist die Freigabeeinheit zusätzlich ausgebildet, bei einem als ausreichend übereinstimmend klassifizierten Venenmuster Zugang zu einem nachgeschalteten System zu ermöglichen. Mithilfe dieser Ausführungsform ist eine doppelte Zugangskontrolle möglich, indem zunächst ein Venenmuster als echt und im Folgeschritt auch als ausreichend übereinstimmend klassifiziert werden muss, um dann gegebenenfalls den Zugang zu nachgeordneten Systemen zu bieten.

In einer bevorzugten Ausführungsform umfasst das Sensorsystem einen zusätzlichen Topographiesensor zum Erfassen dreidimensionaler Topographien und eine zweite mit der ersten Prozessoreinheit und dem Topographiesensor verbundene Prozessoreinheit, die ausgebildet ist, im Betrieb aus dem Infrarotbild der Kamera per Beleuchtung mit der ersten Lichtquelle und den dreidimensionalen Topographiedaten des Topographiesensors ein normiertes Venenmuster einer Hand oder einen dem Venenmuster entsprechenden Merkmalsvektor zu generieren. In der Prozessoreinheit werden die Topographiedaten und das Venenmuster derart verknüpft, dass ein normiertes Venenmuster wie auch ein normiertes Handgeometriebild, also eine normierte Topographie der Hand, berechnet werden können. Es handelt sich somit um eine Lagenormierung im Raum. Sowohl Handgeometrie als auch Venenverästelung, also Venenmuster, sind beides räumliche Strukturen, deren 2D-Abbildungen auf einem Kamerachip von ihrer räumlichen Lage (Verdrehung, Verkippung, Verkrümmung etc.) abhängig sind. Ein Detektionssystem basierend auf dieser Ausführungsform des Sensorsystems ist tolerant gegenüber der Handlage (Position und Ausrichtung der Hand und der einzelnen Finger) und benötigt keine mechanischen Auflagen für die Hand, um eine "richtige" Positionierung der Hand sicherzustellen.

In einer bevorzugten Weiterbildung ist dann die Freigabeeinheit ausgebildet bei Vorliegen eines echten Venenmusters den Topographiesensor zu starten. Damit wird ein effizientes System bereitgestellt, indem zum einen Topographiedaten nur erfasst werden und damit eine zweite Sicherheitsüberprüfung gestartet wird, wenn sichergestellt ist, dass es sich bei dem Venenmuster um ein echtes Venenmuster handelt und nicht um eine Fälschung, und zum anderen muss der Topographiesensor nicht in ständigem Betrieb gehalten werden, solange kein Venenmuster als echt erkannt wurde.

Vorteilhaft ist die erste Prozessoreinheit zusätzlich ausgebildet, das von der zweiten Prozessoreinheit generierte normierte Venenmuster oder den generierten Merkmalsvektor mit mindestens einem hinterlegten Venenmuster oder mit mindestens einem hinterlegten Merkmalsvektor zu vergleichen, und das generierte normierte Venenmuster oder den generierten Merkmalsvektor als ausreichend übereinstimmend oder nicht-ausreichend übereinstimmend zu klassifizieren. Weiterhin ist es vorteilhaft, wenn diese Freigabeeinheit zusätzlich ausgebildet ist, bei einem als ausreichend übereinstimmend klassifizierten Venenmuster oder Merkmalsvektor Zugang zu einem nachgeschalteten System zu ermöglichen. Damit ist ein besonders sicheres Prüfen von Handvenenmustern möglich, da zum einen die Freigabe in zwei Schritten, nämlich zunächst in der Kontrolle der Echtheit des Venenmusters und danach in einer Kontrolle der ausreichenden Übereinstimmung mit hinterlegten Venenmustern, überprüft wird und gleichzeitig kommt die Einrichtung ohne Vorgaben für die Einbringung der Hand aus, ist also tolerant gegenüber der Handlage.

In einer weiteren Ausführungsform ist die zweite Prozessoreinheit zusätzlich ausgebildet, anhand der Topographiedaten und der Infrarotbilder zu bestimmen, ob das Venenmuster ein Venenmuster einer Handwurzel, einer Handinnenfläche oder eine Handaußenfläche ist und diese Information an die erste Prozessoreinheit auszugeben. Mit einer solchen Ausführungsform ist es dem System möglich eine noch stärkere Unabhängigkeit von der Lage der Hand bei der Überprüfung zu erreichen, indem das System selbständig feststellen kann, ob das echte Venenmuster mit hinterlegten Venenmustern verglichen werden soll, die aus der Handwurzel, der Handinnenfläche oder der Handaußenfläche stammen. Hierüber kann zum einen ein weiterer Sicherheitsmechanismus eingebaut werden, indem für einen Zugang zum nachgeschalteten System verlangt wird, dass zwei als ausreichend sicher klassifizierte Venenmuster vorliegen müssen, also beispielsweise eines der Handinnenfläche und eines der Handaußenfläche. Zum andern können aber Systeme, die nur ein ausreichend übereinstimmendes Venenmuster verlangen, noch toleranter gegenüber der Handlage gestaltet werden, wenn für jeden Zugangsberechtigten Venenmuster der Handwurzel, der Handinnenfläche oder der Handaußenfläche vorliegen, sodass beispielsweise eine Prüfung auch erfolgen kann, wenn die Handinnenfläche oder nur die Handwurzel dem Sensor zugewandt wird und nicht die Handaußenfläche.

In einer alternativen Ausführungsform ist der Topographiesensor ein Time-of-Flight-Sensor (TOF-Sensor). Dieser bestimmt für jeden Bildpunkt den Abstand eines Objektes vom Sensor, indem die Laufzeit eines infraroten Lichtimpulses erfasst wird und über die Lichtgeschwindigkeit der Abstand berechnet wird. Weiterhin ist es vorteilhaft, wenn die erste Prozessoreinheit ein Hostprozessor, insbesondere ein RFID (Radio-Frequency Identification)-Hostprozessor ist und der Vergleich mit einem in einem RFID-Slaveprozessor hinterlegten Venenmuster oder Merkmalsvektor stattfindet. In diesem Fall ist eine Klassifizierung nur dann möglich, wenn zwischen dem RFID-Hostprozessor und einem RFID-Slaveprozessor ein Verbindungskanal aufgebaut worden ist. Dies erlaubt eine Identifikation ohne die Hinterlegung von Daten in einem Datenbanksystem und somit eine größere Sicherheit, da zur Identifikation am Sensorsystem sowohl das gültige Venenmuster als auch der RFID-Slaveprozessor vorhanden sein muss.

An die Stelle des RFID-Hostprozessors kann alternativ auch ein anderer Verbindungsprozessortyp treten, der mindestens eine aktive Funkverbindungsfähigkeit realisiert, vorzugsweise nach den bekannten Standards WLAN, Bluetooth, ZigBee oder NFC. In diesem Fall ist auch der Slaveprozessor mindestens mit der gleichen aktiven Funkverbindungsfähigkeit wie der Hostprozessor ausgestattet. Der Vergleich findet ebenso, wie im Bezug auf RFID beschrieben, mit einem im Slaveprozessor hinterlegten Venenmuster oder Merkmalsvektor statt.

Aber auch der Vergleich mit Venenmustern oder Merkmalsvektoren, die in einer Datenbank hinterlegt sind, ist vorteilhaft. Hier muss nicht jeder Nutzer mit einem zusätzlichen Identifikationselement ausgestattet werden, sondern er kann die Klassifizierung anhand des ohnehin vorhandenen Musters vornehmen.

In einer Weiterbildung der Erfindung ist das Sensorsystem über einer Tastatur angebracht. Hierbei wird ein Venenmuster im Handrücken detektiert. Dies erlaubt eine einfache Identifizierung auch während eines Eingabevorgangs. Dabei kann die erste Prozessoreinheit des Sensorsystems derart ausgebildet und mit der Tastatur verbunden sein, dass immer wenn eine Taste angeschlagen wird, gleichzeitig ein Verifikationsprozess des Venenmusters angestoßen werden kann, also die Beleuchtung mit der ersten Lichtquelle gestartet werden kann. Die Eingabe dieses Zeichens oder einer Zeichengruppe wird nur dann als gültig erkannt, wenn ein als echt klassifiziertes Venenmuster detektiert wird. Soll zusätzlich sichergestellt werden, dass nur bestimmte Benutzer Zugriff erhalten, wir die Eingabe erst dann als gültig erkannt, wenn zusätzlich das Venenmuster als ausreichend übereinstimmend klassifiziert wurde.

Der Vorteil einer solchen Anordnung ist, dass eine permanente Authentifizierung des Nutzers in einem Kommunikationsprozess beispielsweise mit einem Computer gewährleistet werden kann und damit permanent sichergestellt werden kann, dass nur berechtigte Nutzer auf den Computer oder das mit ihm verbundene System zugreifen können.

Ebenso vorteilhaft kann das Sensorsystem aber auch in einer Tastatur integriert sein und ein Venenmuster der Handinnenfläche zur Identifikation nutzen. Die Tastatur ist hierbei so ausgebildet, dass die Handballen immer über dem Nutzer zugewandten Teil der Tastatur schweben oder auch auf diesem aufliegen können, während die Finger die Tasten erreichen können. Es wird also eine bewusst schmale Anordnung der Tasten gewählt. Zahlentasten beziehungsweise sonstige Funktionstasten werden entweder rechts oder links der Buchstabentasten angelegt. Im dem Nutzer zugewandten Teil der Tastatur ist jeweils für die linke und rechte Hand ein erfindungsgemäßes Sensorsystem in einer Ausführungsform integriert. Je nach Sicherheitsanforderung kann eine Freigabe nachgeschalteter System bei Detektion eines echten und ausreichend übereinstimmenden Venenmusters nur einer Hand oder beider Hände freigeschaltet werden. Das Sensorsystem ist bevorzugt derart ausgebildet, dass es mit einem sehr kurzen Abstand zur Handinnenfläche oder Handwurzel die Venenstruktur detektieren kann, es ist in der Lage die Handinnenfläche mit einer Ausdehnung von bis zu 120 mm bei einem Abstand von der Sensoroberfläche von 5 mm bis 20 mm zu erfassen.

In einem Ausführungsbeispiel umfasst das Sensorsystem mehrere erste Lichtquellen, die in die Computertastatur derart eingebettet sind, dass jede erste Lichtquelle einen Ausschnitt der Handinnenfläche oder der Handwurzel vollflächig beleuchtet. In einem weiteren Ausführungsbeispiel umfasst das Sensorsystem mehrere zweite Lichtquellen für sichtbares Licht, die ebenfalls in die Tastatur derart eingebettet sind, dass jede zweite Lichtquelle einen Ausschnitt der Handinnenfläche oder der Handwurzel vollflächig beleuchtet. Darüber hinaus umfasst diese Ausführungsform mehrere erste und zweite Kamerachips zur Aufnahme und Umwandlung der jeweiligen Ausschnitte des Handvenenmusters. Dabei ist die Anordnung der Kamerachips und der Lichtquellen so gewählt, dass die Kombination aller Lichtbilder beziehungsweise Infrarotbilder der Kamerachips ein weitestgehend vollständiges Abbild der Handinnenfläche oder der Handwurzel erzeugt. Dieses vollständige Bild kann dann einem Verarbeitungsprozess zur Ermittlung des Venenmustertemplates insgesamt zugeführt werden. Die Anordnung von mehreren Kamerachips ergibt sich aus der Notwendigkeit eines sehr kurzen Bildabstandes. Bei der Verwendung nur eines ersten und zweiten Kamerachips kann es unter Umständen dazu kommen, dass die Handinnenfläche optisch nicht vollständig aufgenommen werden kann und damit kein vollständiges Abbild des Venenmusters zur Verarbeitung zur Verfügung gestellt werden kann.

In einer Ausführungsform des Verfahrens wird bei Klassifizieren des Venenmusters als nicht echt ein Warnsignal ausgegeben. Dieses ermöglicht die Initiierung weiterer Sicherheitsmaßnahmen aufgrund der Erkennung eines ungewollten Zugriffsversuches.

Weiterhin ist es vorteilhaft, wenn nach Klassifizierung eines Venenmusters als echt weitere Prozesse freigegeben werden. Es ist dabei insbesondere bevorzugt, dass die weiteren Prozesse die folgenden Schritte umfassen:
- Aufnehmen von Topographiedaten der Hand, und
- Generieren eines normierten Venenmusters der Hand oder eines dem Venenmuster entsprechenden Merkmalsvektors aus den Infrarotbildern und den Topographiedaten.

Das Generieren kann über Berechnung der entsprechenden Muster oder Merkmalsvektoren erfolgen.

Bevorzugt erfolgt im Anschluss ein Vergleich des generierten normierten Venenmusters oder des generierten Merkmalsvektors mit mindestens einem hinterlegten Venenmuster oder Merkmalsvektor und eine Klassifizierung des generierten Venenmusters oder des generierten Merkmalsvektors als ausreichend übereinstimmend oder nicht-ausreichend übereinstimmend mit dem hinterlegten Venenmuster oder Merkmalsvektor. In einer Weiterbildung des Verfahrens werden nach einer Klassifizierung eines Venenmusters oder eines Merkmalsvektors als ausreichend übereinstimmend zusätzliche Prozesse freigegeben. Damit ist ein mehrstufiges Zugangskontrollverfahren realisierbar.

Weitere Ausführungsbeispiele des erfindungsgemäßen Verfahrens und der erfindungsgemäßen Vorrichtung werden nachfolgend anhand der Figuren erläutert. Es zeigen:
- Fig. 1: ein Ablaufschema für eine Ausführungsform des erfindungsgemäßen Verfahrens;
- Fig. 2: eine schematische Darstellung einer Ausführungsform eines erfindungsgemäßen Sensorsystems zur Prüfung eines Handvenenmusters;
- Fig. 3: eine schematische Darstellung eines weiteren Ausführungsbeispiels eines erfindungsgemäßen Sensorsystems; und
- Fig. 4: ein Sicherheitssystem.

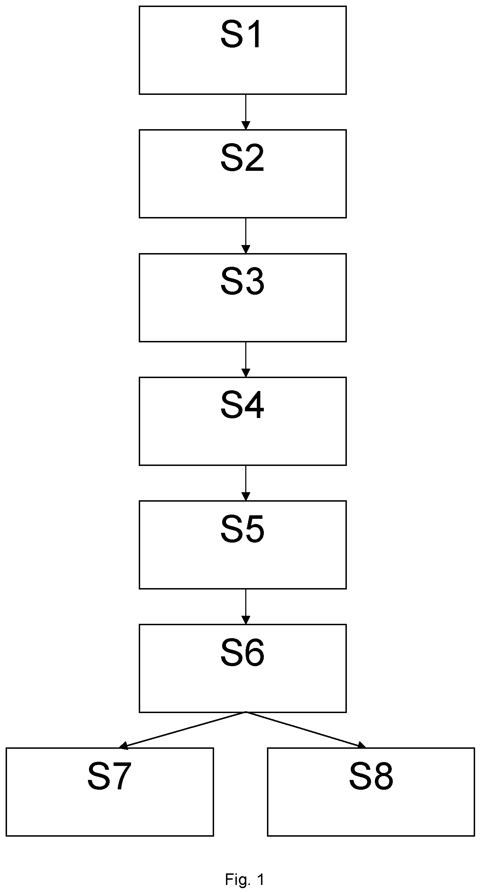

Fig. 1 zeigt ein Ablaufschema eines Verfahrens zur Prüfung von Handvenenmustern. In Schritt S1 wird hierbei eine Hand oder ein in den Strahlengang eingebrachtes Objekt mit einer ersten Lichtquelle bestrahlt, die vollflächig elektromagnetische Wellen mit Wellenlängen im nahen Infrarotbereich vorzugsweise zwischen 780 nm und 1100 nm aussendet, die von Hämoglobin absorbiert werden.

In Schritt S2 werden reflektierte elektromagnetische Wellen mit Wellenlängen im nahen Infrarotbereich aufgenommen und in ein entsprechendes Infrarotbild umgewandelt. Die Aufnahme und Umwandlung geschieht dabei mittels eines ersten Kamerachips.

In Schritt S3 wird die Hand oder das Objekt mit einer zweiten Lichtquelle vollflächig bestrahlt, die elektromagnetische Wellen mit Wellenlängen im Bereich des sichtbaren Lichtes aussendet, und in Schritt S4 reflektierte elektromagnetische Wellen mit Wellenlängen im Bereich des sichtbaren Lichtes aufgenommen und in ein entsprechendes Lichtbild umgewandelt.

In einer bevorzugten Ausführungsform findet Schritt S3 dabei unmittelbar nach Schritt S1 statt, sodass sich eine unmittelbare Abfolge von Bild zu Bild oder Teilbildern ergibt und sich die Hand oder das Objekt in beiden Bestrahlungen in derselben Position befindet. In Schritt S5 werden die Infrarotbild und Lichtbildverglichen und ein Übereinstimmungsgrad zwischen Lichtbild und Infrarotbild festgestellt. Der Vergleich kann beispielsweise über Differenzbildverfahren oder einen Vergleich des Informationsgehaltes des Infrarotbildes und des Lichtbildes oder einen Vergleich auf der Basis ausgewählter Punkte erfolgen. In Schritt S6 wird ein Venenmuster als echt klassifiziert, wenn der Übereinstimmungsgrad kleiner ist als ein vorbestimmter Übereinstimmungsgrad und als nicht echt, wenn der Übereinstimmungsgrad größer oder gleich dem vorbestimmten Übereinstimmungsgrad ist. Der Übereinstimmungsgrad wird in dieser Ausführungsform durch einen mehrdimensionalen Vektor repräsentiert werden, der ein Ähnlichkeitsmaß ergibt. Über die Klassifizierung wird sichergestellt, dass es sich bei dem bestrahlten Objekt um eine echte Hand handelt und nicht etwa um eine Fälschung, bei der ein Venenmuster nur aufgedruckt oder andersartig aufgebracht ist. Optional kann in Schritt S7 nach Klassifizierung des Venenmusters als echt ein weiterer Prozess, beispielsweise weitere Zugangskontrollen, in denen das echte Venenmuster mit hinterlegten Venenmustern verglichen werden, und danach eine endgültige Freigabe beziehungsweise die Vergabe einer Zugangsberechtigung erfolgen, angeschlossen werden.

Stimmen Lichtbild und Infrarotbild in zu großem Maße überein - wird das Venenmuster also nicht als echt klassifiziert - so kann in Schritt S8 ein Warnsignal ausgegeben werden. Dieses Warnsignal kann beispielsweise als ein akustisches Warnsignal an Sicherheitspersonal in der Umgebung des Sensorsystems oder eines Zugangskontrollsystems, in dem das Sensorsystem integriert ist, ausgegeben werden, sodass der unerlaubte Zugriffsversuch vermeldet wird. Alternativ oder zusätzlich kann das Warnsignal aber auch derart ausgestaltet sein, dass es an weitere Sicherheitssysteme ausgegeben wird, die daraufhin Zugangseinrichtungen elektronisch beispielsweise für bestimmte Zeiträume blockieren oder auch den Zugriff auf das Sensorsystem für einen vorbestimmten Zeitraum blockieren.

Als Schritte einer weiteren Zugangskontrolle eignen sich beispielweise die folgenden Schritte, die hier nicht dargestellt sind: Aufnehmen von Topographiedaten der Hand, nachdem das Venenmuster als echt klassifiziert wurde und Berechnen oder Generieren eines normierten Venenmusters der Hand oder eines dem Venenmuster entsprechenden Merkmalsvektors aus dem Infrarotbild und den Topographiedaten sowie einen nachfolgenden Vergleich des generierten normierten Venenmusters oder des generierten Merkmalsvektors mit mindestens einem hinterlegten Venenmuster oder Merkmalsvektor und Klassifizierung des generierten Venenmusters oder des generierten Merkmalsvektors als ausreichend übereinstimmend oder als nicht-ausreichend übereinstimmend, abhängig vom Grad der tatsächlichen Übereinstimmung. Nach einer Identifizierung des Venenmusters oder des Merkmalsvektors als ausreichend übereinstimmend können dann weitere zusätzliche Prozesse freigegeben werden wie beispielsweise der Zugriff auf ein elektronisches System.

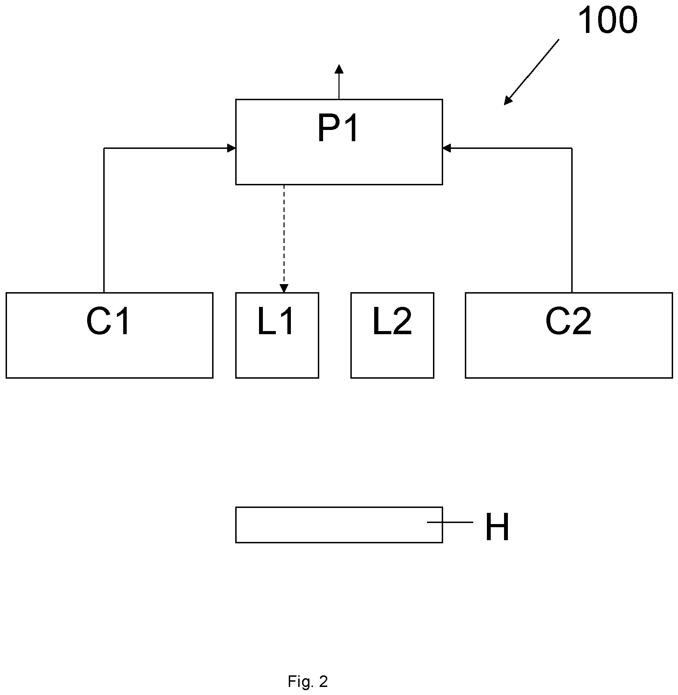

Fig. 2 zeigt eine Ausführungsform eines erfindungsgemäßen Sensorsystems zur Prüfung von Handvenenmustern. Das Sensorsystem umfasst eine erste Lichtquelle L1, eine zweite Lichtquelle L2, eine Kamera mit einem ersten Kamerachip C1 und einem zweiten Kamerachip C2 sowie eine Prozessoreinheit P1. Die erste Lichtquelle L1 des Sensorsystems 100 ist dabei ausgebildet, einen Erfassungsbereich des Sensorsystems im Betrieb vollflächig mit elektromagnetischen Wellen mit Wellenlängen im nahen Infrarotbereich zu beleuchten, die von Hämoglobin absorbiert werden. Die zweite Lichtquelle L2 ist ausgebildet, den Erfassungsbereich des Sensorsystems im Betrieb vollflächig mit elektromagnetische Wellen mit Wellenlängen im Bereich des sichtbaren Lichtes - also mit sichtbarem Licht - zu beleuchten.

Die Kamera weist einen ersten Kamerachip C1 mit einer ersten Lichtsensor-Matrix und einen zweiten Kamerachip C2 mit einer zweiten Lichtsensor-matrix sowie ein oder mehrere Objektive auf, um auf die Lichtsensor-Matrizen je ein Lichtbild zu projizieren. Der erste Kamerachip C1 umfasst einen für elektromagnetische Wellen mit Wellenlängen im nahen Infrarotbereich empfindlichen Matrix-Sensor, um ein entsprechendes Infrarotbild aufzunehmen und Infrarotlichtbildsignale auszugeben. Der zweite Kamerachip C2 umfasst einen für elektromagnetische Wellen mit einer oder verschiedenen Wellenlängen im Bereich sichtbaren Lichts empfindlichen Matrix-Sensor, um ein entsprechendes Lichtbild unter sichtbarem Licht aufzunehmen und Lichtbildsignale auszugeben.

Anstelle zweier Kamerachips kann auch ein einziger kombinierter Kamerachip mit einer sowohl für Infrarotlicht als auch für eine oder verschiedene Wellenlängen im sichtbaren Wellenlängenbereich des Lichts empfindlichen Lichtsensor-Matrix vorgesehen sein. Beispielsweise kann ein solcher Kamerachip in der Lichtsensor-Matrix abwechselnd unterschiedlich empfindliche Sensorzellen aufweisen, nämlich zum einen solche, die (nur) für sichtbares Licht empfindlich sind und zum anderen solche, die (nur) für Infrarotlicht empfindlich sind. Insbesondere können für verschiedene Wellenlängenbereiche im sichtbaren Wellenlängenspektrum des Lichts unterschiedlich empfindliche Sensorzellen vorgesehen sein, wie dies z.B. von Kamerachips für Farb-Digitalkameras her bekannt ist, so dass der einzige kombinierte Kamerachip auch unterschiedliche Lichtbilder für verschieden Wellenlängenbereich des sichtbaren Lichts liefern kann. Alternativ kann auch eine einzige Lichtsensor-Matrix mit breitbandig - also sowohl für sichtbares als auch für Infrarotlicht - empfindlichen Sensorzellen vorgesehen sein. Infrarotlichtbilder unter Infrarotlicht und Lichtbilder unter sichtbarem Licht können dann durch entsprechendes abwechselndes Ein- und Ausschalten der Lichtquellen L1 und L2 erfolgen.

Auch für die Lichtquellen L1 und L2 gilt, dass anstelle zweier separater Lichtquellen eine einzige breitbandige Lichtquelle vorgesehen sein kann, die den Erfassungsbereich des Sensorsystems gleichzeitig sowohl mit sichtbarem Licht als auch mit Infrarotlicht beleuchtet. Die beiden unterschiedlichen Bilder, nämlich das Infrarotbild und das Lichtbild unter sichtbarem Licht können dann durch die beiden unterschiedlich empfindlichen Kamerachips C1 und C2 oder die unterschiedlich empfindlichen Sensorzellen des einen Kamerachips gewonnen werden.

Vorzugsweise sind die Lichtquellen dazu ausgebildet, zeitlich begrenzte Lichtimpulse auszusenden und vorzugsweise sind der erste und der zweite Kamerachip oder der einzige kombinierte Kamerachip mit derjeweiligen Lichtquelle derart synchronisiert, dass deren Sensorzellen auftreffendes Licht erst mit einer vorgegebenen Verzögerungszeit erfassen, um Streulicht auszublenden (gated imaging). Konkret bedeutet dies, dass von auf eine jeweilige Sensorzelle auftreffenden Photonen erzeugte elektrische Ladungen erst mit der vorgegebenen Verzögerungszeit gegenüber dem Aussenden des entsprechenden Lichtimpulses gesammelt und somit aufintegriert werden, so das im Ergebnis nur von weiter als ein Mindestmaß entfernten Strukturen reflektierte Anteile des Lichtimpulses erfasst werden.

Die Prozessoreinheit P1 ist mit dem ersten und dem zweiten Kamerachip (oder dem einen Kamerachip) verbunden und ausgebildet, ein durch Lichtbildsignale repräsentiertes Lichtbild und ein dazugehöriges, durch Infrarotlichtbildsignale repräsentierest Infrarotbild miteinander zu vergleichen, einen Übereinstimmungsgrad zwischen Lichtbild und Infrarotbild zu bestimmen und das Venenmuster als echt zu klassifizieren, wenn der Übereinstimmungsgrad kleiner ist als ein vorbestimmter Übereinstimmungsgrad und das Venenmuster als nicht echt zu klassifizieren, wenn der Übereinstimmungsgrad größer oder gleich dem vorbestimmten Übereinstimmungsgrad ist. Die Prozessoreinheit P1 verwirklicht somit eine Bildvergleichseinheit.

Mithilfe dieses Sensorsystems ist es möglich ein im Erfassungsbereich des Sensorsystems befindliches Objekt H als Hand mit einem echten Venenmuster oder als Fälschung zu identifizieren und damit Zugriff auf nachgeordnete Systeme über eine Fälschung zu verhindern.

In einer Ausführungsform ist die Prozessoreinheit P1 weiterhin ausgebildet, bei Klassifizierung eines Venenmusters als nicht echt eine Ausgabe eines Warnsignales zu veranlassen. In einer weiteren Ausführungsform ist eine hier nicht dargestellte Freigabeeinheit mit dem Sensorsystem verbunden, die ausgebildet ist, bei Klassifizierung des Venenmusters als echt Zugang zu einem nachgeschalteten System, z.B. einem Sicherheitssystem mit einer Authentifizierungseinheit, zu ermöglichen.

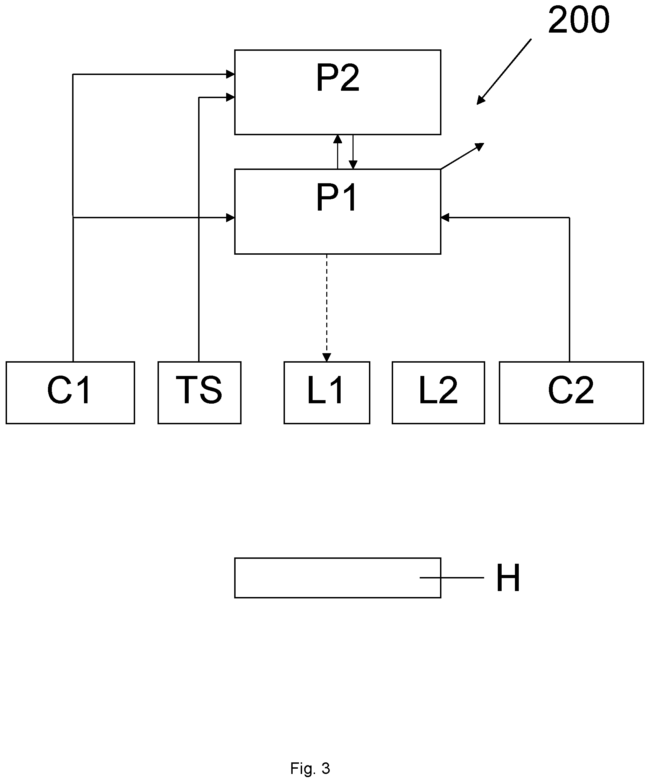

Fig. 3 zeigt eine schematische Darstellung eines weiteren Ausführungsbeispiels eines erfindungsgemäßen Sensorsystems. Der prinzipielle Aufbau des Sensorsystems in Fig. 3 ähnelt dem in Fig. 2 gezeigten System, daher werden im Folgenden vorwiegend die Unterschiede näher beschrieben. Das in Fig. 3 dargestellte das Sensorsystem 200 umfasst zusätzlich einen Topographiesensor TS zum Erfassen dreidimensionaler Topographien und eine Musterverarbeitungseinheit P2, die mit der ersten Prozessoreinheit P1 und dem Topographiesensor TS verbunden ist. Der Topographiesensor TS kann beispielsweise eine auf dem Time-of-Flight (TOF) Prinzip arbeitende 3D-Kamera sein, die aus der Laufzeit von verschiedenen Punkten auf der Oberfläche eines Objekts reflektierten Lichtimpulsen einen Abstand der verschiedenen Punkte auf der Oberfläche des Objekts zu der Kamera zu bestimmen und entsprechende, eine dreidimensionale Topographie repräsentierende Topographiedaten zu generieren und auszugeben.

Die auf dem Time-of-Flight (TOF) Prinzip arbeitende 3D-Kamera kann auch einen Kamerachip mit einer Lichtsensor-Matrix aufweisen, die abwechselnd unterschiedlich empfindliche Sensorzellen aufweist, nämlich zum einen solche, die (nur) für sichtbares Licht empfindlich sind und zum anderen solche, die (nur) für Infrarotlicht empfindlich sind. Derselbe Kamerachip kann auch zum Aufnehmen von 3D-Bildern nach dem Time-of-Flight Prinzip verwendet werden, so dass die 3D-Kamera sowohl als Topographiesensor als auch als Infrarotbildkamera und als Kamera für sichtbares Licht wirkt und das System nur eine einzige Kamera benötigt.

Vorzugsweise arbeitet die Kamera für die Aufnahme der Infrarotbilder und der Lichtbilder als gated imaging Kamera, bei der die Sensorzellen des Kamerachips mit einer Abgabe von Lichtimpulsen durch die Lichtquellen derart synchronisiert sind, das die Sensorzellen reflektiertes Licht erst mit einer vorgegebenen Verzögerung gegenüber der Abgabe eines jeweiligen Lichtimpulses erfassen. Auf diese Weise werden auf sehr kurze Distanz zur Kamera reflektieret Lichtimpulse nicht erfasst. Die Verzögerung wird so vorgegeben, dass nur solches Licht, das von Strukturen reflektierte wird, die weit genug von der Kamera entfernt sind, erfasst wird. Die Verzögerung ist so eigenstellt, dass von interessierenden Strukturen reflektiertes Licht erfasst wird, während Licht, welches von Strukturen "vor" den interessierenden Strukturen reflektiert wird, nicht erfasst wird. Strukturen "vor" den interessierenden Strukturen sind Strukturen, die der Kamera näher sind, als die interessierenden Strukturen.

In dem in Figur 3 dargestellten Ausführungsbeispiel kann der Topographiesensor TS insbesondere so ausgebildet sein, dass er zum Einen auf die erste, Infrarotlicht ausendende Lichtquelle L1 zugreift, um Infrarotlicht-Impulse auszulösen, und zum Anderen auf den für Infrarotlicht empfindlichen Kamerachip C1 oder für Infrarotlicht empfindliche Sensorzellen eines einzigen Kamerachips zuzugreifen, um die reflektierten Infrarotlichtimpulse zu erfassen und die Laufzeit derselben zwischen Auslösen eines Infrarotlichtimpulses und Erfassen der entsprechenden reflektierten Infrarotlichtimpulse durch die einzelnen Sensorzellen zu bestimmen.

Die Musterverarbeitungseinheit P2 ist ausgebildet, im Betrieb aus dem mithilfe des Kamerachips C1 aufgenommen Infrarotbild bei Beleuchtung mit der ersten Lichtquelle L1 und den mithilfe des Topographiesensors gewonnenen, eine dreidimensionale Topographie repräsentierenden Topographiedaten ein normiertes Venenmuster einer Hand oder einen dem Venenmuster entsprechenden Merkmalsvektor zu generieren. Vorzugsweise ist das Sensorsystem 200 so konfiguriert, dass der Musterverarbeitungseinheit P2 nur solche Venenmuster zur weiteren Verarbeitung zugeführt werden, die zuvor im Rahmen des Vergleichs von Infrarotbild und Lichtbild als echte Venenmuster erkannt wurden. Wie weiter vorne ausgeführt, ist dies der Fall, wenn Infrarotbild und Lichtbild hinreichend verschieden sind, also z.B. kein Foto eines Venenmusters zur Täuschung des Sensorsystems verwendet wurde.

In einer Ausführungsform verfügt das Sensorsystem 200 zusätzlich über eine Freigabeeinheit, die einerseits ausgebildet ist, bei ausreichend geringer Übereinstimmung zwischen Lichtbild und Infrarotbild, also bei Klassifizierung eines Venenmusters als echt, den Topographiesensor zu starten und die andererseits zusätzlich ausgebildet ist, einem nachfolgend als ausreichend übereinstimmend klassifizierten Venenmuster oder Merkmalsvektor Zugang zu einem nachgeschalteten System zu ermöglichen. Die Freigabeeinheit ist in Fig. 3 nicht gezeigt.

In einer Ausführungsform ist die erste Prozessoreinheit P1 weiterhin ausgebildet, in einem Ruhemodus des Sensorsystems, in dem nur die zweite Lichtquelle in regelmäßigen Intervallen Lichtimpulse aussendet, aus den reflektierten Lichtimpulsen einen Abstand zu berechnen und beim Unterschreiten eines vorbestimmten Mindestabstands eine Bestrahlung mit der ersten Lichtquelle zu starten. Die Ausführungsform des Sensorsystems 200 ist insbesondere vorteilhaft zur Prüfung von Venenmustern, wenn der Bereich, in dem sich die zu erkennende Hand befindet, möglichst frei sein soll, das heißt, keine Einschränkungen für die Lage der Hand vorgegeben sein sollen. Über die Normierung des Venenmusters mithilfe des Topographiesensors ist das System tolerant gegenüber der Lage der Hand. Insbesondere können Systeme realisiert werden, die sowohl für Venenmuster in Handwurzeln als auch Handinnenflächen und Handaußenflächen geeignet sind.

Die Musterverarbeitungseinheit P2 ist vorzugswese dazu konfiguriert, aus einem aufgenommenen Venenmuster unabhängig von der bei der Aufnahme des Venenmusters herrschenden Handhaltung ein normiertes Venenmuster zu bestimmen, also ein Venenmuster, dass sich bei einer bestimmten, vorgegebenen Handhaltung (z.B. mit gestreckten und aneinander anliegenden Fingern) ergibt bzw. ergeben würde. Im Rahmen der Normierung des Handvenenmusters wird beispielsweise das Venenmuster einer bei der Aufnahme gekrümmten Hand so transformiert, dass dem Venenmuster der gestreckten Hand entspricht, sofern für die Normierung vorgegeben ist, dass die gestreckte Hand als Normhaltung zugrunde zu legen ist. Die Musterverarbeitungseinheit P2 kann Bestandteil der Prozessoreinheit P1 sein.

Ein Sensorsystem der hier vorgestellten Art, also z.B. das Sensorsystem 100 oder insbesondere das Sensorsystem 200 können Bestandteil eines Sicherheitssystems sein.

In einem einfachen Fall ist die Prozessoreinheit P1 vorzugsweise zusätzlich ausgebildet, ein als echt erfasstes Venenmuster oder ein von der Musterauswerteeinheit generiertes oder berechnetes (normiertes) Venenmuster oder einen generierten oder berechneten Merkmalsvektor mit mindestens einem hinterlegten Venenmuster oder mit mindestens einem hinterlegten Merkmalsvektor zu vergleichen und das generierte normierte Venenmuster oder den generierten Merkmalsvektor als ausreichend übereinstimmend oder nicht-ausreichend übereinstimmend zu klassifizieren.

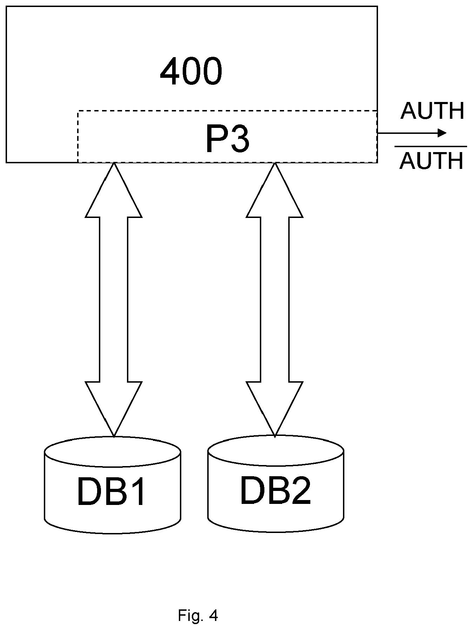

Bevorzugt ist ein Sicherheitssystem, das neben einem Sensorsystem 400 eine Authentifizierungseinheit P3 sowie zwei Datenbanken DB1 und DB2 aufweist; siehe Fig. 4. Das Sensorsystem 400 kann beispielsweise ein Sensorsystem wie das Sensorsystem 100 oder 200 aus Figur 2 bzw. 3 sein.

Alternativ kann das Sensorsystem aber auch nur einen infrarot-empfindlichen Kamerachip aufweisen und keinen für sichtbares Licht empfindlichen Kamerachip. Dann ist das Sicherheitssystem gemäß Fig. 4 zwar nicht in der Lage ein in Form eines Fotos vorgetäuschtes Venenmuster als Täuschung zu erkennen. Die durch den Einsatz zweier unabhängiger Datenbanken erzielten Vorteile hinsichtlich der strikten Datentrennung ergeben sich aber trotzdem.

Die erste Datenbank DB1 enthält wenigstens eine Datenstruktur, zum Beispiel eine Zuordnungstabelle oder look-up-table (LUT), in der einzelnen Personen oder Objekten Identifizierungscodes zugeordnet sind.

Die zweite Datenbank DB2 enthält wenigstens eine Datenstruktur, zum Beispiel eine Zuordnungstabelle oder look-up-table (LUT), in der den Identifizierungscodes jeweils wenigstens ein charakteristisches Muster (z.B. ein Venenmuster, insbesondere ein normiertes Venenmuster) oder ein Merkmalsvektor zugeordnet sind.

Zur Authentifizierung einer Person wird zusammen mit dem Venenmuster der Hand der Person auch eine grafische Wiedergabe des der Person zugeordneten Identifizierungscodes der Person erfasst, und zwar vorzugsweise von dem für sichtbares Licht empfindlichen zweiten Kamerachip C2 alternativ aber auch zusätzlich oder ausschließlich durch einen infrarot-empfindlichen Kamerachip.

Die grafische Wiedergabe des Identifizierungscodes kann beispielsweise ein QR-Code, aber auch eine Bar-Code oder eine gedruckter Ziffern-Code sein.

Durch die Verknüpfung des Identifizierungscodes mit dem Handvenenmuster ist es auch in einem datenbankbasierten System nicht erforderlich, die Identität einer Person mit einem biometrischen Vektor (Hashwert o.ä.) unmittelbar zu verknüpfen.

Vielmehr werden zwei vollkommen getrennte Datenbanken DB1 und DB2 verwendet. In der ersten Datenbank DB1 ist die Personenidentität mit dem Identifizierungscode verknüpft und in der zweiten, von der ersten unabhängigen Datenbank DB2 ist der Identifizierungscode mit dem aus den biometrischen Daten erzeugte Handvenenmuster oder Merkmalsvektor - insbesondere einem daraus abgeleiteten Hashwert - verknüpft.

Die Authentifizierungseinheit P3 ist ausgebildet, auf Basis eines von dem Sensorsystem 400 erfassten biometrischen Daten ein Venenmuster oder Merkmalsvektor, insbesondere einem daraus abgeleiteten Hashwert, zu bestimmen und auf Basis dieses so bestimmten Venenmusters oder Merkmalsvektors, insbesondere eines daraus abgeleiteten Hashwerts, auf die zweite Datenbank DB2 zuzugreifen um einem dem jeweiligen Venenmuster oder Merkmalsvektor, insbesondere einem daraus abgeleiteten Hashwert, zugeordneten Identifizierungscode abzurufen und auszugeben. Zusätzlich kann die Authentifizierungseinheit P3 auch ausgebildet sein, auf Basis des abgerufenen Identifizierungscodes auf die erste Datenbank DB1 zuzugreifen und die dem Identifizierungscode zugeordnete Personenidentität aus der ersten Datenbank DB1 abzurufen und auszugeben.

Dieses Verfahren und das Verwenden von zwei unabhängigen Datenbanken erhöhen also den Abstand zwischen biometrischem Merkmal und Identität der Person.

Eine Institution, die einen Identitätsnachweis ausgeben will (z.B. Ausweis, Benutzerkarte, Fahrkarte, Flugschein etc..) kann jeder Person einen Identifizierungscode zuordnen. Damit erhält die Person bereits alle Zutritts- bzw. Zugriffsrechte. Das weiter vorne beschriebene Venenmustererkennungssystem kann zusätzlich eine grafische Wiedergabe des entsprechenden Identifizierungscodes aufnehmen und damit eine Person identifizieren.

Der vorzugsweise verwendete für sichtbares Licht empfindliche Kamerachip C2 (oder alternativ ein infrarot-empfindlicher Kamerachip) kann eine gedruckte grafische Wiedergabe des Identifizierungscodes, beispielsweise einen QR-Code, sowohl auf Papier, einem anderen Material aber auch von einem elektronischen Display (Smartphone, Tablet o.ä.) aufnehmen.

Auch hier ist es möglich, von der grafischen Wiedergabe des Identifizierungscodes sowohl ein Lichtbild unter sichtbarem Licht (mittels des zweiten Kamerachips C2 bzw. der entsprechenden für sichtbares Licht Sensorzellen eines einzigen Kamerachips) als auch ein Infrarotbild (mittels des ersten Kamerachips C1 bzw. der entsprechenden infrarotempfindlichen Sensorzellen eines einzigen Kamerachips). In diesem Fall unterscheidet sich die Signatur der Bildsignale im Infrarotbild und im Lichtbild. Der Unterschied wird u.a. von der Materialität bestimmt. Es lässt sich erkennen, ob das vorliegende Bild eine Hand (Haut), Papier oder ein Display abbildet. Auch kann die gedruckte grafische Wiedergabe des Identifizierungscodes mit unterschiedlichen Farben gedruckt sein. Beispielsweise kann ein Teil der grafischen Wiedergabe des Identifizierungscodes mit breitbandig absorbierender Farbe wie Rußschwarz gedruckt sein, während ein anderer Teil der grafischen Wiedergabe des Identifizierungscodes mit einer Farbe gedruckt ist, Infrarotlicht reflektiert oder weniger stark absorbiert. Auf diese Weise kann eine grafische Wiedergabe des Identifizierungscodes von einer Kopie derselben leicht unterschieden werden, indem das Infrarotbild und das Lichtbild der grafischen Wiedergabe des Identifizierungscodes miteinander verglichen werden. Ähnlich wie beim Venenmuster deutet auch hier eine Identität von Infrarotbild und Lichtbild auf eine Fälschung hin.

Zur Authentifizierung einer Person (oder eines Objekts) ist die im Zusammenhang mit den Figuren 1 bis 3 beschriebene Vorrichtung mit einer Authentifizierungseinheit P3 verknüpft, die konfiguriert ist, aus einer von dem Sensorsystem 400 erfassten grafische Wiedergabe des Identifizierungscodes den Identifizierungscode abzuleiten und dem Identifizierungscode einen aus dem Handvenenmuster abgeleiteten Merkmalsvektor (bzw. den zugehörigen Hashwert) zuzuordnen. Der aus dem Handvenenmuster abgeleiteten Merkmalsvektor (bzw. Hashwert) und die grafische Wiedergabe des Identifizierungscodes stehen sich dann als Synonym gegenüber.

Durch Zugriff auf die beiden Datenbanken DB1 und DB2 kann die Authentifizierungseinheit P3 prüfen, ob ein erfasstes Venenmuster und eine erfasste garfische Wiedergabe eines Identifizierungscodes zu derselben Person gehören und gegebenenfalls die entsprechende Person authentifizieren und ein Authentifizierungs-Bestätigungssignal AUTH ausgeben.

Wie in Fig. 4 angedeutet, kann die Authentifizierungseinheit P3 Teil des Sensorsystems 400 sein. Die Authentifizierungseinheit P3 kann aber auch eine Prozessoreinheit sein, die physisch unabhängig von dem Sensorsystem ist und mit dem Sensorsystem nur signaltechnisch verbunden ist.

Die Zuordnung zwischen einer Person und einer grafischen Wiedergabe des Identifizierungscodes erfolgt unabhängig und getrennt.

Im Folgenden werden Beispiele beschrieben, wie das Sensorsystem ausgebildet und konfiguriert sein kann, um eine Person anhand ihres Venenmusters und einer grafischen Wiedergabe des Identifizierungscodes zu authentifizieren:

### Verfahren 1: Authentifizierung einer registrierten Person

Das Sensorsystem ist vorzugsweise ausgebildet, zu erkennen, ob in seinem Erfassungsbereich eine Hand oder eine grafische Wiedergabe eines Identifizierungscodes vorliegt. Wird dem Sensorsystem ein seinem Erfassungsbereich ein Bar- oder QR-Code vorgelegt, prüft und erkennt das Sensorsystem zunächst, dass es sich um keine Hand und folglich um kein Venenmuster handelt.

Das Sensorsystem testet dann auf der Basis des Lichtbildes weiter, ob eine grafische Wiedergabe eines Identifizierungscodes vorliegt. Trifft dies zu so wird in der ersten und der zweiten Datenbank jeweils nach einem entsprechenden Eintrag gesucht. Kann kein passender Eintrag gefunden werden, erzeugt die Sensoreinheit ein Ausgangsignal A̅U̅T̅H̅.

Falls die entsprechenden Einträge vorliegen, vergleicht das Sensorsystem den in der zweiten Datenbank dem erkannten Identifizierungscode zugeordneten Hashwert oder Merkmalsvektor mit dem entsprechenden Hashwert oder Merkmalsmuster des zuvor als echt erkannten Handvenenmusters. Wenn der Merkmalsvektor oder Hashwert des erfassten Handvenenmusters dem Merkmalsvektor oder Hashwert entspricht, der in der zweiten Datenbank dem Identifizierungscode zugeordnet ist, erzeugt die Sensoreinheit ein Ausgangsignal AUTH und ein Zutritt oder Zugriff kann der entsprechenden, auf diese Weise authentifizierten Person freigegeben werden.

### Verfahren 2: Registrierung einer Person für eine zukünftige Authentifizierung

Im Folgenden wird ein Beispiel beschrieben, wie das Sensorsystem ausgebildet und konfiguriert sein kann, um eine Person für eine Authentifizierung anhand ihres Venenmusters zu registrieren.

**Erster Schritt**: Das Sensorsystem wird in den Registriermodus versetzt. Das Sensorsystem weist hierfür einen Umschalter auf, der beispielsweise durch Berühren eines Symbols (z.B. REGISTER) betätigt werden kann. Wird das Symbol berührt (oder fast berührt), wechselt das Sensorsystem in den Registriermodus. Die Berührung des Symbols wird als Geste identifiziert, die dem Umschalter auslöst und das Sensorsystem in seinen Registriermodus schaltet. Das Sensorsystem verfügt über einen hochauflösenden Bildaufnehmer der entweder als 2D-Bildaufnehmer mit einem Punktprojektor oder als 3D-TOF-Sensor ausgelegt ist und auf dieses Weise eine Handhaltung im 3D-Raum aufnehmen und verarbeiten kann.

Es wird eine spezifische Form der Handhaltung identifiziert. Die Annäherung an das Symbol (eine vollständige Berührung ist nicht erforderlich) wird erwartungsgemäß durch einen Zeigefinger ausgeführt. Diese Geste wird erkannt. Der Apparat ist nun im Registriermodus.

**Zweiter Schritt**: Der Nutzer wird aufgefordert die grafische Wiedergabe des Identifizierungscodes vorzulegen.

**Dritter Schritt**: Die vorliegende grafische Wiedergabe des Identifizierungscodes wird auf Gültigkeit getestet. Es erfolgt eine Suche des durch die grafische Wiedergabe repräsentierten Identifizierungscodes in der ersten Datenbank DB1.

Wird kein entsprechender Eintrag gefunden wird der Vorgang abgebrochen.

Wird ein gültiger Eintrag gefunden, so wird in einer zweiten Datenbank DB2 ein Eintrag mit dem zugehörigen Identifizierungscode angelegt.

**Vierter Schritt**: Der Nutzer wird aufgefordert seine Hand vorzuzeigen. Das Venenmuster der Hand wird mit einer Sensoreinheit 100 gemäß Figur 2 oder Sensoreinheit 200 gemäß Figur 3 erfasst und auf Echtheit geprüft. Ist die Echtheit gegeben, berechnet die Prozessoreinheit P1 einen Merkmalsvektor und der errechnete Merkmalsvektor (oder ein entsprechender Hashwert) wird in der zweiten Datenbank DB2 dem Identifizierungscode zugeordnet.

**Fünfter Schritt**: Die zweite Datenbank wird über eine zentrale Datenbankplattform mit weiteren in einem verbundenen Zugriffs- oder Zutrittssystem vorhandenen Apparaten in festgelegten Abständen (z.B. alle 15 Minuten) abgeglichen. Der Nutzer kann sich folglich an jedem, der im System verbundenen Apparate mit seinem Venenmuster identifizieren. Den Bar- oder QR-Code kann er sicher hinterlegen. Ein Verlust des Bar- oder Qr-Codes führt zu keiner Identifikation der Person. Jede Person kann sich immer wieder mit einem neuen Bar- oder QR-Code registrieren bzw. mehrfach registrieren.

In einer bevorzugten Ausführungsform ist das Sicherheitssystem derart konfiguriert, dass Einträge in der zweiten Datenbank, die eine bestimmte Zeit nicht genutzt werden, automatisch gelöscht werden.

## Patentansprüche

1. Sicherheitssystem mit einem Sensorsystem, einer Authentifizierungseinheit sowie zwei voneinander unabhängigen Datenbanken, von denen in der ersten Datenbank eine Personenidentität mit einem Identifizierungscode verknüpft ist und in der zweiten Datenbank der Identifizierungscode mit einem aus den biometrischen Daten erzeugte Venenmuster oder Merkmalsvektor, insbesondere einem daraus abgeleiteten Hashwert, verknüpft ist und die Authentifizierungseinheit ausgebildet ist, auf Basis eines von dem Sensorsystem erfassten biometrischen Daten ein Venenmuster oder Merkmalsvektor, insbesondere einem daraus abgeleiteten Hashwert, zu bestimmen und auf Basis dieses so bestimmten Venenmusters oder Merkmalsvektors, insbesondere eines daraus abgeleiteten Hashwerts, auf die zweite Datenbank zuzugreifen um einem dem jeweiligen Venenmuster oder Merkmalsvektor, insbesondere einem daraus abgeleiteten Hashwert, zugeordneten Identifizierungscode abzurufen und auszugeben.

2. Sensorsystem insbesondere für ein Sicherheitssystem gemäß Anspruch 1, wobei das Sensorsystem zum Prüfen eines Venenmusters ausgebildet ist und
- eine erste Lichtquelle zum vollflächigen Beleuchten eines Erfassungsbereichs, welche ausgebildet ist, im Betrieb elektromagnetische Wellen mit Wellenlängen im nahen Infrarotbereich auszusenden, die von Hämoglobin absorbiert werden,
- eine zweite Lichtquelle zum vollflächigen Beleuchten des Erfassungsbereichs, die ausgebildet ist, im Betrieb elektromagnetische Wellen mit mindestens einer weiteren Wellenlänge, insbesondere im Bereich des sichtbaren Lichtes auszusenden,
- eine Kamera zum Abbilden des Erfassungsbereichs auf einen ersten Kamerachip mit ersten Sensorzellen, die ausgebildet sind, reflektierte elektromagnetische Wellen mit Wellenlängen im nahen Infrarotbereich aufzunehmen und ein entsprechendes Infrarotbild repräsentierende Signale auszugeben und auf einen zweiten Kamerachip mit zweiten Sensorzellen oder zweite Sensorzellen des ersten Kamerachips, die ausgebildet sind, reflektierte elektromagnetischer Wellen mit der mindestens einen weiteren Wellenlänge insbesondere im Bereich des sichtbaren Lichtes aufzunehmen und ein entsprechendes Lichtbild repräsentierende Signale auszugeben, sowie
- eine erste mit dem ersten und gegebenenfalls dem zweiten Kamerachip verbundene Prozessoreinheit, die ausgebildet ist, das Lichtbild und das Infrarotbild miteinander zu vergleichen, einen Übereinstimmungsgrad zwischen Lichtbild und Infrarotbild zu bestimmen und das Venenmuster als echt zu klassifizieren, wenn der Übereinstimmungsgrad kleiner ist als ein vorbestimmter Übereinstimmungsgrad und das Venenmuster als nicht echt zu klassifizieren, wenn der Übereinstimmungsgrad größer oder gleich dem vorbestimmten Übereinstimmungsgrad ist
aufweist.

3. Sensorsystem nach Anspruch 1, **dadurch gekennzeichnet, dass** die erste Prozessoreinheit zum Vergleichen des Infrarotbildes mit dem Lichtbild zur Durchführung eines Differenzbildverfahren oder zum Vergleichen des Informationsgehaltes des Infrarotbildes mit dem des Lichtbildes oder zu einem Vergleich auf der Basis ausgewählter Punkte des Infrarotbildes und des Lichtbildes ausgebildet ist.

4. Sensorsystem nach einem der vorstehenden Ansprüche, **dadurch gekennzeichnet, dass** die erste und zweite Lichtquelle in Form einer einzigen breitbandigen Lichtquelle mit einem ersten und einem zweiten Filter ausgebildet sind, wobei der erste Filter ausgebildet ist, nur elektromagnetische Wellen mit Wellenlängen im nahen Infrarotbereich passieren zu lassen und der zweite Filter ausgebildet ist, nur elektromagnetische Wellen mit Wellenlängen im Bereich des sichtbaren Lichtes passieren zu lassen.

5. Sensorsystem nach einem der vorstehenden Ansprüche, **dadurch gekennzeichnet, dass** der erste und der zweite Kamerachip oder der einzige kombinierte Kamerachip mit der jeweiligen Lichtquelle derart synchronisiert sind, dass auf deren Sensorzellen auftreffendes Licht erst mit einer vorgegebenen Verzögerungszeit gegenüber der Abgabe eines Lichtimpulses durch die jeweilige Lichtquelle erfasst wird.

6. Sensorsystem nach einem der vorstehenden Ansprüche, **dadurch gekennzeichnet, dass** die erste Prozessoreinheit weiterhin ausgebildet ist, bei Klassifizierung des Handvenenmusters als nicht echt eine Ausgabe eines Warnsignales zu veranlassen.

7. Sensorsystem nach einem der vorstehenden Ansprüche, **dadurch gekennzeichnet, dass** eine mit dem Sensorsystem verbundene Freigabeeinheit vorgesehen ist, die ausgebildet ist, bei Klassifizierung des Venenmusters als echt einen Authentifizierungsprozess zu veranlassen.

8. Sensorsystem nach Anspruch 7, bei der die erste Prozessoreinheit zusätzlich ausgebildet ist, den Authentifizierungsprozess auszuführen, indem die erste Prozessoreinheit eine Bildvorverarbeitung des Infrarotbildes, eine Merkmalsextraktion und eine Klassifikation durchführt, bei der das Venenmuster auf Basis einer Mustervorgabe als ausreichend übereinstimmend oder nicht ausreichend übereinstimmend klassifiziert wird.

9. Sensorsystem nach einem der vorstehenden Ansprüche, bei dem die erste Prozessoreinheit zusätzlich ausgebildet ist, bei Klassifizierung des Venenmusters als echt das Infrarotbild mit mindestens einer Mustervorgabe in Form eines hinterlegten Venenmusters oder eines dem Venenmuster entsprechenden hinterlegten Merkmalsvektors zu vergleichen und das als echt klassifizierte Venenmuster abhängig von einem Muster-Übereinstimmungsgrad als ausreichend übereinstimmend oder nicht ausreichend übereinstimmend zu klassifizieren und bei dem die Freigabeeinheit zusätzlich ausgebildet ist, bei einem als ausreichend übereinstimmend klassifizierten Venenmuster Zugang zu einem nachgeschalteten System zu ermöglichen.

10. Sensorsystem nach einem der Ansprüche 2 bis 9 mit einem zusätzlichen Topographiesensor zum Erfassen dreidimensionaler Topographien und einer zweiten mit der ersten Prozessoreinheit und dem Topographiesensor verbundenen Prozessoreinheit, die ausgebildet ist, im Betrieb aus dem Infrarotbild der Kamera bei Beleuchtung mit der ersten Lichtquelle und den dreidimensionalen Topographiedaten des Topographiesensor ein normiertes Venenmuster einer Hand oder einen dem Venenmuster entsprechenden Merkmalsvektor zu generieren, bei dem die erste Prozessoreinheit zusätzlich ausgebildet ist, das von der zweiten Prozessoreinheit generierte normierte Venenmuster oder den generierten Merkmalsvektor mit mindestens einem hinterlegten Venenmuster oder mit mindestens einem hinterlegten Merkmalsvektor zu vergleichen und das generierte normierte Venenmuster oder den generierten Merkmalsvektor als ausreichend übereinstimmend oder nicht ausreichend übereinstimmend zu klassifizieren und bei dem die Freigabeeinheit zusätzlich ausgebildet ist, bei einem als ausreichend übereinstimmend klassifizierten Venenmuster oder Merkmalsvektor Zugang zu einem nachgeschalteten System zu ermöglichen.

11. Verfahren zum Prüfen eines Venenmusters umfassend:
- vollflächiges Bestrahlen einer Hand oder eines Teilbereiches der Hand mit elektromagnetischen Wellen mit Wellenlängen im nahen Infrarotbereich, die von Hämoglobin absorbiert werden,
- Aufnehmen von reflektierten elektromagnetischen Wellen mit Wellenlängen im nahen Infrarotbereich und Umwandeln in ein entsprechendes Infrarotbild,
- vollflächiges Bestrahlen der Hand oder eines Teilbereiches der Hand mit elektromagnetischen Wellen mit mindestens einer weiteren Wellenlänge, insbesondere im Bereich des sichtbaren Lichtes,
- Aufnehmen von reflektierten elektromagnetischen Wellen mit der mindestens einen weiteren Wellenlänge und Umwandeln in ein entsprechendes Lichtbild,
- Vergleichen des Lichtbildes und des Infrarotbilds,
- Bestimmen eines Übereinstimmungsgrad zwischen Lichtbild und Infrarotbild und
- Klassifizieren des Handvenenmusters als echt, wenn der Übereinstimmungsgrad kleiner ist als ein vorbestimmter Übereinstimmungsgrad und als nicht echt, wenn der Übereinstimmungsgrad größer oder gleich dem vorbestimmten Übereinstimmungsgrad ist.

12. Verfahren nach Anspruch 11, **dadurch gekennzeichnet, dass** nach Klassifizieren des Venenmusters als echt weitere Prozesse freigegeben werden.

13. Verfahren nach Anspruch 12, **dadurch gekennzeichnet, dass** die weiteren Prozesse folgende Schritte umfassen:
- Aufnehmen von Topographiedaten der Hand und
- Generieren eines normierten Venenmusters der Hand oder eines dem Venenmuster entsprechenden Merkmalsvektors aus dem Infrarotbild und den Topographiedaten.

14. Verfahren nach Anspruch 13, **dadurch gekennzeichnet, dass** ein Vergleich des generierten normierten Venenmusters oder des generierten Merkmalsvektors mit mindestens einem hinterlegten Venenmuster oder Merkmalsvektor durchgeführt wird und das generierte Venenmuster oder der generierte Merkmalsvektor als ausreichend übereinstimmend oder nicht ausreichend übereinstimmend klassifiziert wird.

15. Verfahren nach Anspruch 14, **dadurch gekennzeichnet, dass** nach einer Klassifizierung eines Venenmusters oder eines Merkmalsvektors als ausreichend übereinstimmend zusätzliche Prozesse freigegeben werden.
